# FASCICULE DE BREVET EUROPEEN

(11) **EP 1 986 266 B1**
(45) Date de publication et mention de la délivrance du brevet: **16.02.2022**
(21) Numéro de dépôt: 08155151.7
(22) Date de dépôt: 25.04.2008
(51) Int. Cl.: H01Q 1/12, H01Q 1/44, H04B 7/15, H01Q 1/00, H04B 7/155

(54) **Système repeteur à antenne transparente intégrée dans une vitre**
Verstärkersystem mit einer in eine Verglasung eingebauten durchsichtigen Antenne
Repeater system with transparent antenna integrated in a window

(30) Priorité: 26.04.2007 FR 0754710
(43) Date de publication de la demande: 29.10.2008
(73) Titulaire: Nokia Technologies Ltd, 02610 Espoo (FI)
(72) Inventeur: Motta Cruz, Eduardo, 44800 SAINT HERBLAIN (FR); Hayart, Vincent, 44120 VERTOU (FR); Himdi, Mohamed, 35200 RENNES (FR); Colombel, Franck, 35160 MONTFORT SUR MEU (FR); Dessarce, Jean-Philippe, 31500 TOULOUSE (FR)
(74) Mandataire: Novagraaf Technologies

(56) Documents cités:
- EP-A- 1 657 778
- WO-A-02/095866
- WO-A-2004/088787
- WO-A-2007/144688
- JP-A- 11 122 023
- JP-A- S61 150 402
- US-A1- 2002 140 611
- US-A1- 2003 142 018
- US-A1- 2004 176 027

## Description

Le domaine de l'invention est celui des systèmes répéteur utilisés pour relayer les échanges entre une station de base d'un réseau de télécommunication mobile et un terminal d'usager.

De tels systèmes sont typiquement utilisés pour assurer une couverture du réseau de télécommunication mobile dans des zones mal couvertes par les stations de base du réseau. Il s'agit notamment de l'intérieur de bâtiments dans lesquels les champs électriques en provenance de stations de base extérieures sont fortement atténués. Il en découle que les usagers du réseau présents à l'intérieur de tels bâtiments se trouvent parfois dans l'incapacité d'utiliser les services du réseau (par exemple pour recevoir et émettre des appels).

On relèvera en particulier le cas des bâtiments modernes qui font appel à des verres athermiques. Ce type de verre possède effectivement une couche métallisée qui atténue fortement le signal envoyé par la station de base vers les terminaux à l'intérieur du bâtiment, et réciproquement le signal envoyé par les terminaux vers la station de base. Le document WO02/095866 divulgue un système répéteur qui comporte une antenne disposée à l'intérieur d'un bâtiment et une antenne disposée à l'extérieur d'un bâtiment.

Un système répéteur comporte typiquement :
- une antenne positionnée à l'extérieur du bâtiment, apte à communiquer avec une station de base du réseau,
- une antenne positionnée à l'intérieur du bâtiment, apte à communiquer avec un terminal d'usager,
- des moyens réémetteurs prévus pour faire l'interface entre les antennes, en réémettant (avec possibilité d'amplification et de régénération) les signaux reçus par l'une des antennes à destination de l'autre antenne.

On comprend qu'un tel système répéteur permet d'étendre la couverture réseau à l'intérieur du bâtiment, de sorte que les usagers situés à l'intérieur du bâtiment peuvent bénéficier d'une bonne couverture réseau.

Lors de la mise en place d'un tel système répéteur, diverses difficultés apparaissent toutefois notamment du fait de l'installation de l'antenne extérieure sur le bâtiment, de l'installation de l'antenne intérieure dans le bâtiment (typiquement sur les murs ou plafonds), ou encore de l'installation des câbles coaxiaux reliant les différents composants du système.

L'invention a pour objectif de réduire ces contraintes dans l'installation d'un système répéteur, et vise notamment à proposer un système compact dont l'intégration à un bâtiment est simplifiée.

A cet effet, l'invention propose un élément de construction de type fenêtre comprenant un système répéteur selon la revendication 1.

Certains aspects préférés, mais non limitatifs, de ce système sont définis dans les revendications dépendantes.

D'autres aspects, buts et avantages de la présente invention apparaîtront mieux à la lecture de la description détaillée suivante de formes de réalisation préférées de celle-ci, donnée à titre d'exemple non limitatif, et faite en référence aux dessins annexés sur lesquels :
- la figure 1 est un schéma représentant un système répéteur selon un mode de réalisation possible de l'invention ;
- la figure 2 est un schéma représentant les différents composants d'une antenne externe selon un mode de réalisation possible de l'invention ;
- la figure 3 est une vue en coupe schématique d'une antenne externe selon un mode de réalisation possible de l'invention ;
- les figures 4a et 4b illustrent différents modes de réalisation possible de l'alimentation d'une antenne externe conforme à l'invention ;
- les figures 5a et 5b illustrent l'intégration du système selon l'invention dans différents éléments de construction de type fenêtre.

Selon un premier aspect, l'invention concerne un système répéteur pour relayer les échanges entre une station de base d'un réseau de télécommunication mobile et un terminal d'usager.

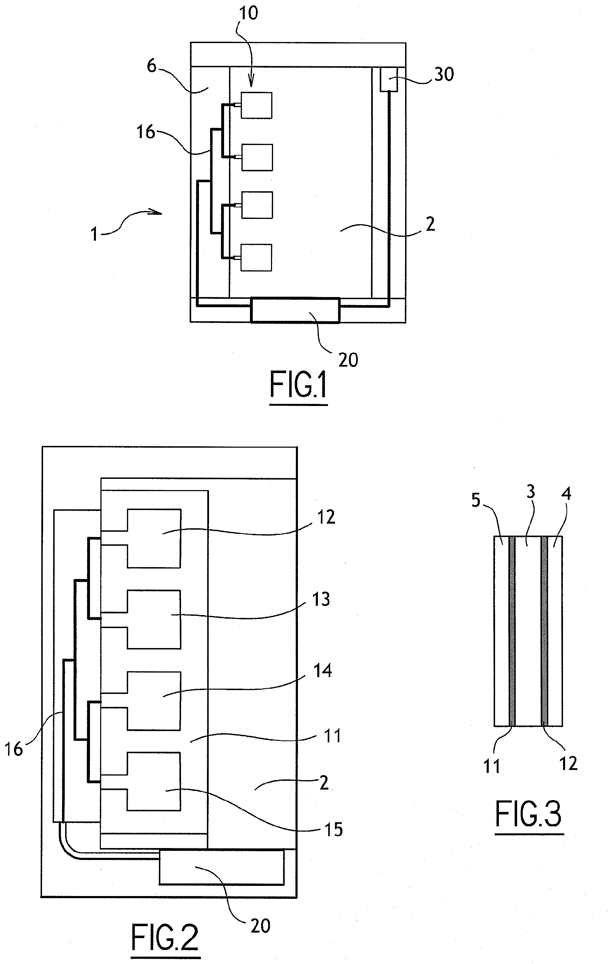

En référence à la figure 1, le système répéteur 1 comporte
- une antenne externe 10 apte à communiquer avec une station de base (non représentée) d'un réseau de télécommunications mobiles ;
- et des moyens réémetteurs 20 reliés à l'antenne externe 10, les moyens réémetteurs 20 étant destinés à faire l'interface entre l'antenne externe 10 et une antenne interne 30 apte à communiquer avec le terminal d'un usager du réseau de télécommunication, pour réémettre les signaux reçus par l'une ou l'autre des antennes à destination de l'autre antenne.

On comprend qu'un tel système répéteur 1 permet de réémettre à destination de l'antenne interne 30 (éventuellement après amplification ou régénération) le signal capté par l'antenne externe 10 en provenance d'une station de base. Ceci permet de faire transiter ce signal à l'intérieur d'un espace clos, à destination notamment d'un terminal d'usager. Similairement, un tel système réémetteur 1 permet de réémettre à destination de l'antenne externe 10 (éventuellement après amplification ou régénération) le signal capté par l'antenne interne 30 en provenance d'un terminal d'usager situé à l'intérieur de l'espace clos. Le signal peut alors être réémis à destination d'une station de base du réseau.

Dans le cadre de l'invention, l'antenne externe 10 est une antenne planaire optiquement transparente intégrée à un panneau 2 optiquement transparent servant à l'éclairage intérieur d'un espace.

L'espace dont le panneau 2 sert à l'éclairage intérieur est typiquement un espace du type bâtiment, véhicule automobile ou ferroviaire, etc.

On prendra dans la suite de la description l'exemple d'un bâtiment. On comprendra cependant que l'invention n'est pas limitée à cet exemple, mais s'étend à tout espace pour lequel l'éclairage intérieur est assuré à l'aide d'un panneau optiquement transparent.

Le panneau 2 fait typiquement partie d'un élément de construction de type fenêtre, dont il constitue ce qui est communément désigné par le terme de « vitre ».

Selon un mode de réalisation possible de l'invention représenté sur les figures 2, 3, 4a et 4b, l'antenne externe 10 est une antenne planaire de type antenne imprimée. L'antenne 10 comporte un plan de masse 11, un plan de rayonnement 12 sous la forme d'un ou plusieurs éléments rayonnants 12-15 (ces éléments, dits également patchs, n'étant bien entendu pas limités au nombre de quatre), et un substrat diélectrique interposé entre le plan de masse 11 et le plan de rayonnement 12.

Une partie 3 du panneau 2 est utilisée pour former le substrat diélectrique de l'antenne externe, de sorte que l'antenne externe 10 est intégrée dans le panneau 2.

On notera ici que la partie 3 du panneau 2 peut être une couche physique du panneau 2, par exemple une couche de verre, ou encore une couche de vide, par exemple lorsque le panneau 2 est une structure du type à double vitrage.

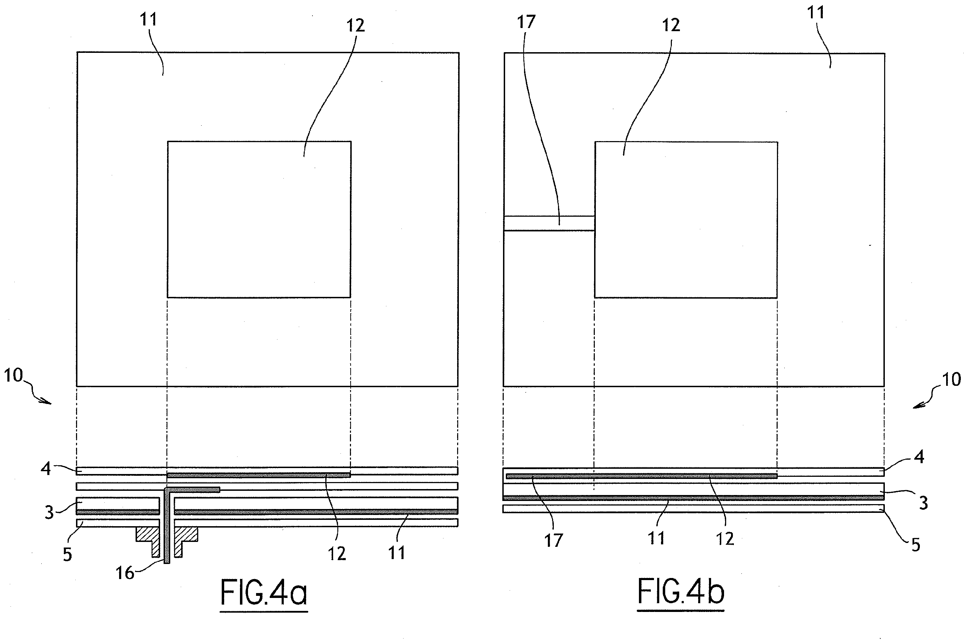

Par ailleurs, le plan de masse 11 et le plan de rayonnement 12 peuvent être pris en sandwich entre des couches 4, 5 diélectriques optiquement transparentes du panneau 2, de manière à obtenir les structures empilées représentées sur les figures 3, 4a et 4b.

La couche 5 donne vers l'intérieur du bâtiment, tandis que la couche 4 donne vers l'extérieur du bâtiment. La couche 5 supporte ainsi le plan de masse 11 de l'antenne externe, tandis que la couche 4 recouvre le plan de rayonnement 12 de l'antenne externe.

Le panneau 2 est typiquement en verre. Le panneau 2 peut toutefois être formé de tout autre matériau diélectrique optiquement transparent, par exemple en plexiglas.

On relèvera ici que le panneau 2 peut être constitué de couche de nature différente. On peut en particulier prévoir d'utiliser du verre athermique (comprenant comme on l'a vu une couche métallisée radio électriquement opaque) pour la couche 5 supportant le plan de masse 11 (ce qui permettra en outre de renforcer le blindage du plan de masse), et un verre radio électriquement transparent pour la couche 4 de manière à garantir le rayonnement libre de l'antenne externe vers l'extérieur.

Le plan de masse 11 et le ou les éléments rayonnants 12-15 du plan de rayonnement 12 sont chacun formés par dépôt d'un matériau conducteur optiquement transparent sur un film plastique, par exemple sur un film en polyester. Le matériau conducteur optiquement transparent peut également être directement déposé sur le panneau par des procédés de gravure.

Il s'agit typiquement d'un dépôt métallique de très faible épaisseur, de l'ordre de quelques microns.

En référence au mode de réalisation de la figure 3, la partie 3 du panneau 2 servant de substrat diélectrique intercalée entre l'élément rayonnant 12 et le plan de masse 11 présente une épaisseur de 6 mm. Les couches 4, 5 du panneau venant prendre en sandwich la structure élément rayonnant 12/substrat diélectrique 3/plan de masse 11 présentent chacune une épaisseur de 3 mm. Ces épaisseurs sont bien entendu fournies à titre purement indicatif.

Dans le cadre de l'invention, on entend par matériau « conducteur », un matériau substantiellement conducteur présentant une résistivité inférieure à 10 ohm/carré, de préférence inférieure à 5 ohm/carré.

On entend par ailleurs par matériau « optiquement transparent », un matériau substantiellement transparent à la lumière visible, laissant passer au moins environ 30% de cette lumière, et de préférence plus de 60% de la lumière.

Le matériau conducteur optiquement transparent est de préférence, sans pour autant que cela ne soit limitatif, de l'oxyde d'indium-étain (ITO), de l'oxyde d'étain dopé à l'argent (AgHT), ou tout autre matériau métallique. On relèvera que le matériau AgHT est un matériau transparent présentant une résistivité de l'ordre de 4 ohm/carré.

Les pertes radioélectriques étant directement liées à la résistivité du matériau, on propose dans le cadre d'un mode de réalisation préférentiel de l'invention de réduire les pertes de l'antenne externe, et par conséquent d'optimiser son gain, en privilégiant l'utilisation d'éléments rayonnants de forme carré (dont on a pu en particulier vérifier que la résistivité est inférieure à celle d'un élément rayonnent rectangulaire).

Bien entendu, lorsque le panneau 2 constitue la vitre d'une fenêtre de bâtiment, le plan de rayonnement 12 de l'antenne externe 10 est disposé du côté du panneau qui est dirigé vers l'extérieur du bâtiment.

Comme cela est représenté sur la figure 4a, l'alimentation du ou des éléments rayonnants 12-15 de l'antenne externe 10 peut être réalisée par une sonde coaxiale 16.

L'âme de la sonde coaxiale débouche seule d'une ouverture pratiquée dans le plan de masse 11 et vient exciter l'antenne externe par contact direct sur le bord du plan de rayonnement 12, ou (comme cela est représenté sur la figure 4a) par couplage électromagnétique à l'aide d'un tronçon (prolongement de l'âme centrale) vers l'intérieur et parallèle au plan de rayonnement.

On précise ici que l'on entend également dans le cadre de l'invention l'alimentation par « alimentation par sonde coaxiale », tout circuit d'alimentation d'un élément rayonnant ou d'un réseau d'éléments rayonnants constitué par des câbles coaxiaux terminés par une ou plusieurs sondes coaxiales d'excitation du ou des éléments rayonnants.

En variante, comme cela est représenté sur la figure 4b, l'alimentation du ou des éléments rayonnants de l'antenne externe peut être réalisée à l'aide d'une ligne micro-ruban 17. Dans ce cas, une ligne 17 réalisée en AgHT ou ITO, et de largeur très inférieure à la dimension de l'antenne, est utilisée pour apporter l'énergie directement sur le bord de l'antenne externe et donc l'alimenter. Cette ligne 17 est placée dans le même plan que le plan de rayonnement 12.

Selon un mode de réalisation préférentiel de l'invention, et en référence aux figures 1 et 2, le panneau 12 fait partie d'un élément de construction de type fenêtre disposant d'un cadre opaque 6, et les moyens d'alimentation de l'antenne sont agencés dans le cadre 6.

L'agencement des moyens d'alimentation 16 - en particulier lorsqu'il s'agit de moyens d'alimentation sous la forme d'une ligne micro-ruban 17 - dans le cadre opaque s'avère performant du point de vue radioélectrique. Une ligne d'alimentation imprimée sur un substrat diélectrique (par exemple duroïd, verre epoxy) présente effectivement de faibles pertes, ce qui favorise en particulier le gain de l'antenne.

La ligne d'alimentation peut également être conçue sur un matériau transparent. Pour cette variante toutefois, des pertes induites (dues au matériau, aux longueurs des lignes, et surtout aux formes rectangulaires de l'arborescence de la ligne pour l'alimentation de plusieurs éléments rayonnants ; cette arborescence est représentée sur les figures 1 et 2) conduisent actuellement à des performances plus faibles pour ce qui concerne le gain du réseau d'antennes.

Concernant la performance de l'antenne externe, on mentionne ici à titre purement illustratif, qu'une antenne externe selon l'invention alimentée par une sonde coaxiale permet d'obtenir un coefficient de réflexion inférieur à -10 dB sur toute la bande GSM. Le gain mesuré est voisin de -3.5 dBi.

Une antenne fonctionnant à la même fréquence et alimentée par une ligne micro ruban imprimée présente quant à elle un gain d'environ -12 dBi, soit un gain environ -8.5dB en dessous du gain de l'antenne alimentée par sonde coaxiale. Cet écart est imputable aux pertes provenant de la ligne micro-ruban alimentant l'antenne.

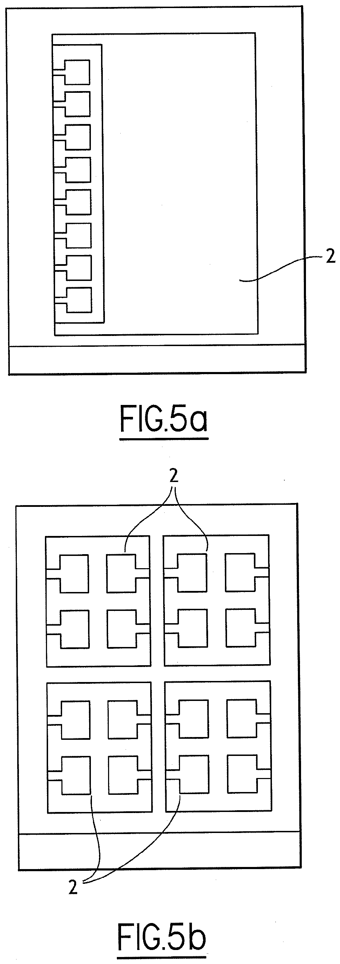

Comme cela est apparent des figures 5a et 5b, l'invention offre l'avantage de pouvoir s'adapter à différentes structures de fenêtres.

On a ainsi représenté sur la figure 5a une fenêtre disposant d'un seul panneau 2, et sur la figure 5b une fenêtre dite « à carreaux » présentant une pluralité de panneaux 2. On comprend que la fenêtre à carreaux présente l'avantage de permettre l'intégration d'un nombre relativement important d'éléments rayonnants, en particulier lorsque les moyens d'alimentation sont intégrés dans les montants de la fenêtre.

On précise ici, sans pour autant que cela ne soit limitatif, que la taille visée pour l'antenne externe est celle d'une fenêtre ordinaire, soit une hauteur allant de 1 m à 1,5 m.

Selon un mode de réalisation possible de l'invention schématisé sur la figure 1, l'antenne interne 30 et les moyens réémetteurs 20 sont des éléments classiques, de préférence de petite taille, qui sont intégrés dans le cadre 6 de la fenêtre.

L'antenne interne 30 peut ainsi être une antenne de type « dipôle » intégrée au montant de la fenêtre.

L'antenne interne 30 peut toutefois être réalisée de manière similaire à l'antenne externe 10, en prévoyant une antenne planaire intégrée au panneau 2. Dans ce cas de figure, on aura bien entendu compris que le(s) élément(s) rayonnant(s) de l'antenne interne 30 sont disposés du côté du panneau qui est dirigé vers l'intérieur du bâtiment.

Les moyens réémetteurs 20 sont du type dispositif « micro-répéteur », à bande sélective opérant dans la bande de l'opérateur du réseau de télécommunication mobile par type de bande : GSM, DCS ou UMTS et par largeur de bande (canaux concernés).

Un exemple de dispositif micro-répéteur pouvant être utilisé dans la bande E-GSM pour former les moyens réémetteurs 20 de l'invention est le système répéteur RF MR 303B EGSM de la société MIKOM.

Selon un mode de réalisation possible du système répéteur selon l'invention, l'antenne interne est déportée du panneau en prévoyant un connecteur de sortie après les moyens réémetteurs 20. Un tel mode de réalisation s'avère avantageux dans le cas où l'espace à couvrir radio électriquement ne se trouve à proximité immédiate du panneau 2.

Selon un autre mode de réalisation possible, les moyens réémetteurs sont déportés du panneau en prévoyant un connecteur de sortie après l'antenne externe. Ce mode de réalisation s'avère notamment avantageux dans le cas de cadres de fenêtres trop exigus pour venir y loger lesdits moyens réémetteurs.

On comprendra que l'invention n'est pas limitée à un système répéteur tel que décrit précédemment, mais s'étend également à un élément de construction de type fenêtre dans lequel est intégré un système selon le premier aspect de l'invention.

## Revendications

1. Elément de construction de type fenêtre comprenant un système répéteur (1) configuré pour relayer les échanges entre une station de base d'un réseau de télécommunication mobile et un terminal d'usager, le système répéteur comprenant :
une antenne interne (30) configurée pour communiquer avec le terminal d'usager ;
une antenne externe (10) configurée pour communiquer avec la station de base;
des moyens réémetteurs (20) reliés à l'antenne externe, l'élément de construction comprenant un panneau (2) optiquement transparent et un cadre opaque ;
les moyens réémetteurs (20) étant destinés à faire l'interface entre l'antenne externe (10) et l'antenne interne (30) pour réémettre après amplification et/ou régénération les signaux reçus par l'une des antennes à destination de l'autre antenne,
l'antenne externe étant une antenne planaire optiquement transparente intégrée audit panneau (2) optiquement transparent configuré pour servir à l'éclairage intérieur d'un espace;
l'antenne externe comprenant un plan de masse (11) et un plan de rayonnement sous la forme d'un ou plusieurs éléments rayonnants (12-15), le plan de masse (11), les élément rayonnants étant chacun formé en un matériau conducteur optiquement transparent, une partie (3) du panneau étant interposée entre le plan de masse et le plan de rayonnement pour former un substrat diélectrique de l'antenne externe ;
l'antenne externe (10) disposant de moyens d'alimentation (16) agencés dans le cadre.

2. Elément de construction selon l'une des revendications précédentes, dans lequel ledit matériau est de l'oxyde d'étain dopé à l'argent (AgHT) ou de l'oxyde d'indium-étain (ITO).

3. Elément de construction selon la revendication 2, dans lequel le plan de masse (11) et le plan de rayonnement (12-15) sont pris en sandwich entre des couches (4, 5) diélectriques optiquement transparentes du panneau (2).

4. Elément de construction selon la revendication 3, dans lequel les couches (4, 5) diélectriques optiquement transparentes comprennent une couche (5) interne supportant le plan de masse (11) et constituée de verre athermique et une couche (4) externe en verre radio électriquement transparent.

5. Elément de construction selon l'une des revendications 1 à 4, dans lequel le panneau (2) est en verre.

6. Elément de construction selon la revendication 1, dans lequel les moyens d'alimentation (16) prennent la forme d'un circuit imprimé (17) sur un substrat diélectrique.

7. Elément de construction selon la revendication 1, dans lequel les moyens d'alimentation prennent la forme d'une alimentation par sonde coaxiale (16).

8. Elément de construction selon l'une des revendications 1 à 7, dans lequel l'antenne interne (30) est intégrée dans le cadre.

9. Elément de construction selon l'une revendication 1 à 7, dans lequel l'antenne interne (30) est une antenne planaire optiquement transparente intégrée au panneau (2).

## Patentansprüche

1. Konstruktionselement vom Typ Fenster, das ein Verstärkersystem (1) umfasst, das dazu ausgestaltet ist, den Austausch zwischen einer Basisstation eines Mobiltelekommunikationsnetzes und einem Benutzerendgerät weiterzugeben, wobei das Verstärkersystem umfasst:
eine innere Antenne (30), die dazu ausgestaltet ist, mit dem Benutzerendgerät zu kommunizieren;
eine äußere Antenne (10), die dazu ausgestaltet ist, mit der Basisstation zu kommunizieren;
Umsetzermittel (20), die mit der äußeren Antenne verbunden sind, wobei das Konstruktionselement eine optisch durchsichtige Platte (2) und einen undurchsichtigen Rahmen umfasst;
wobei die Umsetzermittel (20) dazu bestimmt sind, die Schnittstelle zwischen der äußeren Antenne (10) und der inneren Antenne (30) zu bilden, um nach Verstärkung und/oder erneuter Erzeugung die durch eine der Antennen empfangenen Signale zur anderen Antenne als Bestimmungsort wieder auszustrahlen,
wobei die äußere Antenne eine optisch durchsichtige Planarantenne ist, die in der optisch durchsichtigen Platte (2) integriert ist, die dazu ausgestaltet ist, zur Innenbeleuchtung eines Raums zu dienen;
wobei die äußere Antenne eine Masseebene (11) und eine Strahlungsebene in der Form von einem oder mehreren strahlenden Elementen (12 bis 15) umfasst, wobei die Masseebene (11), die strahlenden Elemente jeweils aus einem optisch durchsichtigen leitfähigen Material gebildet sind, wobei ein Teil (3) der Platte zwischen der Masseebene und der Strahlungsebene eingeschoben ist, um ein dielektrisches Substrat der äußeren Antenne zu bilden;
wobei die äußere Antenne (10) über Versorgungsmittel (16) verfügt, die in dem Rahmen angeordnet sind.

2. Konstruktionselement nach einem der vorhergehenden Ansprüche, wobei das Material mit Silber dotiertes Zinnoxid (AgHT) oder Indiumzinnoxid (ITO) ist.

3. Konstruktionselement nach Anspruch 2, wobei die Masseebene (11) und die Strahlungsebene (12 bis 15) sandwichartig zwischen den optisch durchsichtigen dielektrischen Schichten (4, 5) der Platte (2) positioniert sind.

4. Konstruktionselement nach Anspruch 3, wobei die optisch durchsichtigen dielektrischen Schichten (4, 5) eine innere Schicht (5), die die Masseebene (11) trägt und aus wärmeisolierendem Glas besteht, und eine äußere Schicht (4) aus radioelektrisch durchlässigem Glas umfassen.

5. Konstruktionselement nach einem der Ansprüche 1 bis 4, wobei die Platte (2) aus Glas ist.

6. Konstruktionselement nach Anspruch 1, wobei die Versorgungsmittel (16) die Form einer gedruckten Schaltung (17) auf einem dielektrischen Substrat aufweisen.

7. Konstruktionselement nach Anspruch 1, wobei die Versorgungsmittel die Form einer Versorgung durch Koaxialsonde (16) aufweisen.

8. Konstruktionselement nach einem der Ansprüche 1 bis 7, wobei die innere Antenne (30) in den Rahmen integriert ist.

9. Konstruktionselement nach einem der Ansprüche 1 bis 7, wobei die innere Antenne (30) eine optisch durchsichtige Planarantenne ist, die in die Platte (2) integriert ist.

## Claims

1. A window-type construction element comprising a repeater system (1) configured to relay the exchanges between a base station of a mobile telecommunications network and a user terminal, the repeater system comprising:
an internal antenna (30) configured to communicate with the user terminal;
an external antenna (10) configured to communicate with the base station;
re-transmitting means (20) connected to the external antenna, the construction element comprising an optically transparent panel (2) and an opaque frame;
the re-transmitting means (20) being intended to form the interface between the external antenna (10) and the internal antenna (30) in order to re-transmit, after amplification and/or regeneration, the signals received from one of the antennas for the other antenna,
the external antenna being an optically transparent planar antenna integrated into said optically transparent panel (2) configured to be used for the interior lighting of a space;
the external antenna comprising a ground plane (11) and a radiation plane in the form of one or several radiating elements (12-15), the ground plane (11), the radiating elements each being formed of an optically transparent conductive material, a part (3) of the panel being interposed between the ground plane and the radiation plane to form a dielectric substrate of the external antenna;
the external antenna (10) having feed means (16) arranged in the frame.

2. The construction element according to any of the preceding claims, wherein said material is silver-doped tin oxide (AgHT) or indium-tin oxide (ITO).

3. The construction element according to claim 2, wherein the ground plane (11) and the radiation plane (12-15) are sandwiched between optically transparent dielectric layers (4, 5) of the panel (2).

4. The construction element according to claim 3, wherein the optically transparent dielectric layers (4, 5) comprise an inner layer (5) supporting the ground plane (11) and composed of athermal glass and an outer layer (4) made of electrically transparent radio glass.

5. The construction element according to any of claims 1 to 4, wherein the panel (2) is made of glass.

6. The construction element according to claim 1, wherein the feed means (16) take the form of a printed circuit (17) on a dielectric substrate.

7. The construction element according to claim 1, wherein the feed means take the form of a coaxial probe feed (16).

8. The construction element according to any of claims 1 to 7, wherein the internal antenna (30) is integrated into the frame.

9. The construction element according to any of claims 1 to 7, wherein the internal antenna (30) is an optically transparent planar antenna integrated into the panel (2).
